# EUROPEAN PATENT APPLICATION

(11) **EP 2 267 979 A1**
(43) Date of publication of application: **29.12.2010**
(21) Application number: 10162990.5
(22) Date of filing: 17.05.2010
(51) Int. Cl.: H04L 29/08

(54) **Method and apparatus for loading landing page**

(30) Priority: 24.07.2009 US 509311; 15.05.2009 US 178926 P; 27.05.2009 US 181645 P
(71) Applicant: Novatel Wireless, Inc, San Diego, CA 92121 (US)
(72) Inventor: Beaulieu, Mark, Escondido, CA 92025 (US); Wu, John, San Diego, CA 92127 (US); Carlisle, Matthew, Sammamisch, WA 98074 (US); Missingham, Errol, San Diego, CA 92129 (US); Souissi, Slim, San Diego, CA 92127 (US); Kim, Seong Beom, San Diego, CA 92131 (US); You, Gwan Hee, San Diego, CA 92127 (US)
(74) Representative: Winter, Brandl, Fürniss, Hübner, Röss, Kaiser, Polte - Partnerschaft

(57) **Abstract**

A method comprises receiving a request from a user device by a portable hotspot for a landing page; identifying the user device using a device signature; and retrieving a framework associated with the device signature from a central server. The framework includes one or more content areas, wherein at least one content area includes content available to multiple user devices, and at least one content area includes content specific to the user device. The method further comprises forming a landing page for display on the user device using the framework and the content.

## Description

### CROSS-REFERENCE TO RELATED PATENT APPLICATIONS

This application claims priority under 35 U.S.C. § 119(e) to U.S. Provisional Patent Application Serial No. 61/178,926, titled RULE BASED INTERNET BROWSER REDIRECT FOR WIRELESS WWAN ROUTERS, filed May 15, 2009, and U.S. Provisional Patent Application Serial No. 61/181,645, titled WIRELESS COMMUNICATION SYSTEMS AND METHODS, filed May 27, 2009, each of which is hereby incorporated by reference in its entirety for all purposes.

### BACKGROUND OF THE INVENTION

The present invention relates generally to the field of wireless communication and, more particularly to loading of landing page for user devices.

### SUMMARY OF THE INVENTION

One aspect of the present invention relates to a method comprising receiving a request from a user device by a portable hotspot for a landing page; identifying the user device using a device signature; and retrieving a framework associated with the device signature from a central server. The framework includes one or more content areas, wherein at least one content area includes content available to multiple user devices, and at least one content area includes content specific to the user device. The method further comprises forming a landing page for display on the user device using the framework and the content.

In one embodiment, the retrieving the framework includes retrieving the framework from a central server associated with the portable hotspot. The central server may access a content server to retrieve content for at least one content area.

In one embodiment, the method further comprises accessing a content server to retrieve content for at least one content area.

In one embodiment, the device signature is based on a cookie located on the user device. In another embodiment, the device signature is based on a media access control (MAC) address of the user device.

In one embodiment, at least one content area includes content selected from one of the following: weather, news, traffic or maps. In one embodiment, the content specific to the user includes personal content.

In another aspect of the invention, an apparatus comprises a processor and a memory unit coupled to the processor. The memory unit includes computer code for receiving a request from a user device for a landing page; computer code for identifying the user device using a device signature; computer code for retrieving a framework associated with the device signature from a central server, the framework including one or more content areas, wherein at least one content area includes content available to multiple user devices, and at least one content area includes content specific to the user device; and computer code for forming a landing page for display on the user device using the framework and the content.

In another aspect, the invention relates to an apparatus comprising a first interface configured to wirelessly interface with one or more user devices; a second interface configured to interface with a wireless communication network; and a controller. The controller is configured to receive a request through the first interface from at least one user device for a landing page; identify the user device using a device signature; retrieve a framework associated with the device signature from a central server by accessing the central server through the second interface, the framework including one or more content areas, wherein at least one content area includes content available to multiple user devices, and at least one content area includes content specific to the user device; and form a landing page for display on the user device using the framework and the content.

### BRIEF DESCRIPTION OF THE DRAWINGS

Figure 1 is a schematic illustration of an arrangement according to an embodiment of the present invention;

Figure 2 is a schematic illustration of a hotspot device in accordance with embodiments of the present invention;

Figure 3 is a screenshot of a sample landing page in accordance with embodiments of the present invention; and

Figure 4 is a flow chart illustrating a method for forming a landing page in accordance with embodiments of the present invention.

### DETAILED DESCRIPTION OF THE PREFERRED EMBODIMENTS

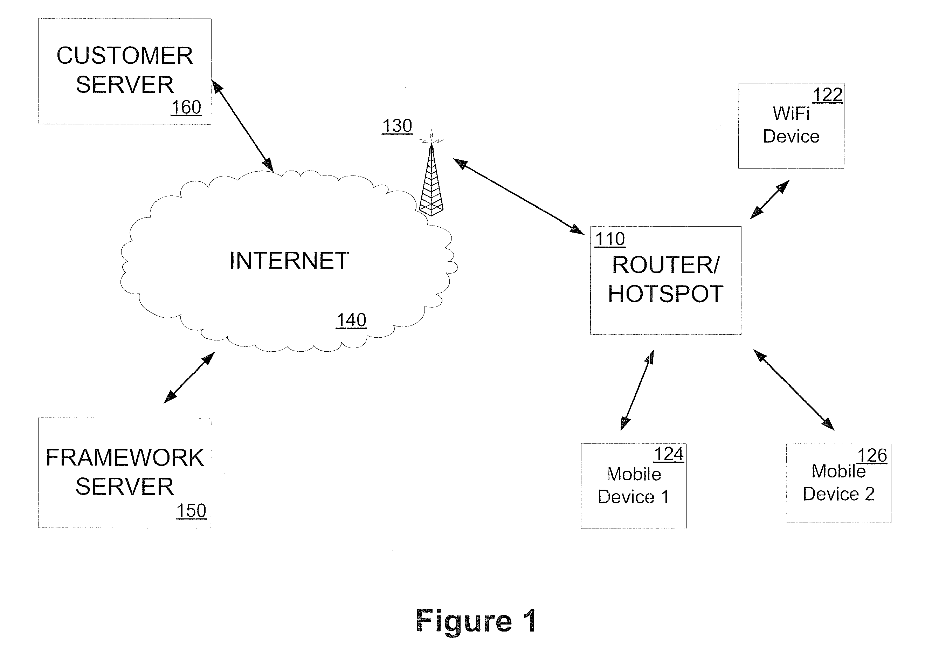

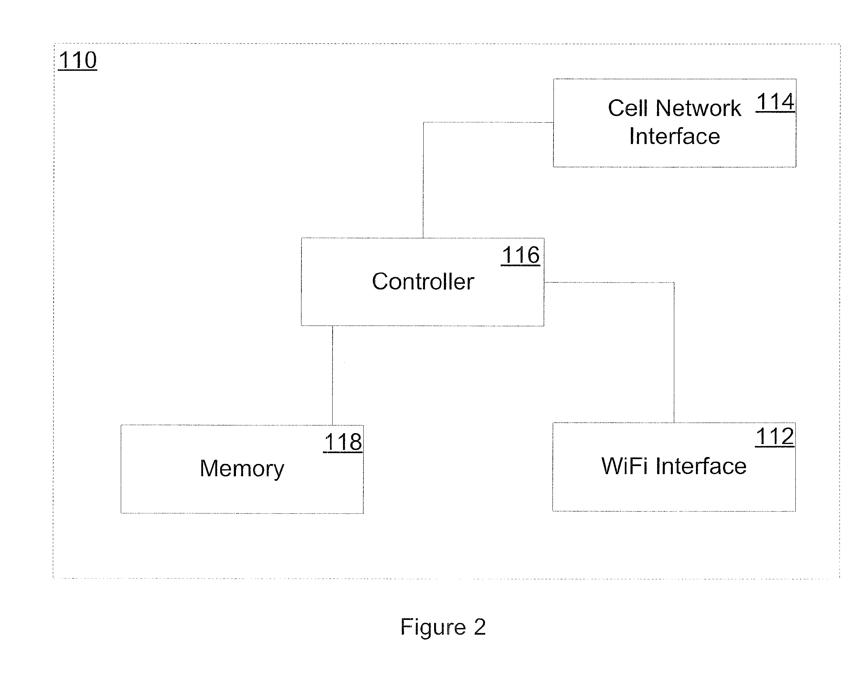

Referring to Figure 1, an arrangement for forming a dynamic landing page in accordance with embodiments of the present invention is schematically illustrated. In the illustrated arrangement, a router or hotspot device 110 is provided to allow network access to one or more user devices 122, 124, 126. In accordance with embodiments of the present invention, the router 110 is a wireless, mobile, portable hotspot device. One embodiment of the router 110 is described in further detail below with reference to Figure 2.

Referring now to Figure 2, an embodiment of the router 110 in accordance with embodiments of the present invention is schematically illustrated. In one embodiment, the router 110 is a wireless wide area network (WWAN)/WiFi data modem personal router which allows multiple users to connect to a 3G network over WiFi. The router 110 includes a first interface and a second interface. In one embodiment, the first interface is a WiFi interface 112 configured to allow the router 110 to wirelessly communicate with user devices using, for example, an IEEE 802.1 protocol. Of course, those skilled in the art will understand that other communication protocols may be used to interface with user devices.

The second interface 114 allows the router 110 to wirelessly interface with a network through, for example, a service provider. In accordance with an embodiment of the present invention, the second interface 114 allows the router 110 to communicate with a cellular network to obtain access to the Internet. Again, those skilled in the art will understand that any of a variety of communication protocols may be used for communication through the second interface.

The router 110 is also provided with a controller 116, or a processor, configured to control various operations of the router 110. The controller 116 is coupled to the first and second interfaces 112, 114. Further, the controller 116 may be configured to process signals received through the interfaces 112, 114 and to transmit signals through the interfaces 112, 114. A memory unit 118 is provided to store, for example, data or computer code which may be accessed by the controller 116. Of course, the router 110 may include various other components (e.g., power source, etc.) necessary for operation of the router.

Referring again to Figure 1, the router 110 may be configured to support a variety of user devices. For example, as illustrated in Figure 1, the router 110 may be accessed by multiple mobile user devices 124, 126, which may be laptops. In addition, WiFi devices, such as a webcam, may also access the router 110. The number of devices which can be supported by the router 110 may vary and may be determined by software, firmware or the like within the router 110.

The router 110 is configured to communicate with a service provider through, for example, a cellular base station 130, through which it may access a communication network. A central server, or framework server 150, may be accessible through the network and may be associated with the router 110, the service provider or both. The framework server 150 is configured to be accessed by the router 110 and to provide requested information to the router 110. Further, in accordance with embodiments of the present invention, one or more servers, such as the customer server 160, may be accessed by the router 110 to provide information or services to the various user devices 122, 124, 126.

In accordance with embodiments of the present invention, the router 110 allows user devices to obtain different views which include a personalized, private view of content. In this regard, embodiments of the present invention simultaneously provide access to public and private content of the router using a framework distributed by a central server, such as the framework server 150. The framework may be managed by an identity agent running on the controller or processor of the router 110.

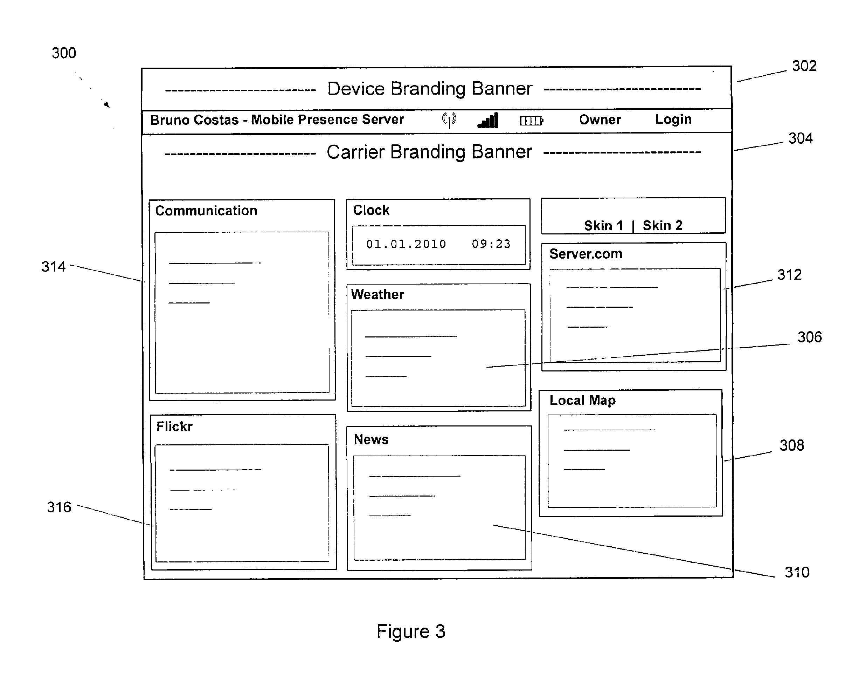

Thus, in accordance with embodiments of the present invention, the router 110 may provide each user device connecting to the router 110 to have its own private view, while allowing other parts of the connection to be a common public data stream. As a result, both public information and branding can be maintained with private personal information. This is demonstrated by the example screenshot illustrated in Figure 3. Figure 3 illustrates a sample landing page 300 in accordance with embodiments of the present invention. The landing page 300 includes content that is public and private to the user or the user device. The public content includes the device branding banner 302, the carrier branding banner 304, a weather widget 306, a map widget 308 and a news widget 310. In addition to the public content, the landing page 300 may include personalized content customized by the user. In the illustrated landing page 300, the personalized content includes a login to a service provider 312, a login to one or more email accounts 314 and a login to a photo server 316. Thus, the user device may display a customized landing page 300 which includes public information available to all user devices connected to the router 100, as well as private information directed to each specific user or user device.

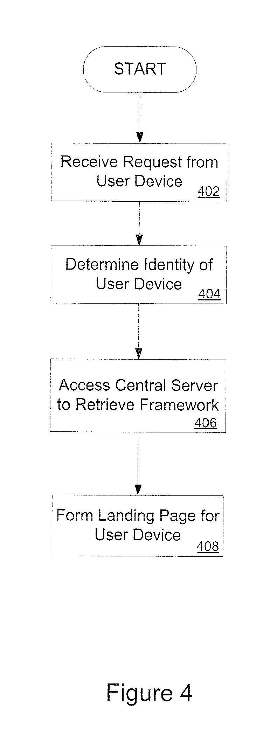

Referring now to Figure 4, a flow chart illustrates a method for forming a landing page in accordance with embodiments of the present invention. In accordance with embodiments of the present invention, the method is executed by a common gateway interface (CGI) application program interface (API) agent running on the controller or processor of the router 100. At block 402, the controller receives a request from a user device. The request may be issued by the user device by, for example, launching a web browser. The agent then determines the identity of the user device by using a device signature. In various embodiments, the device signature may uniquely identify the user device or the user. In one embodiment, the device signature is a browser cookie stored on the user device. In other embodiments, the device signature may be the media access control (MAC) address of the user device.

At block 406, the router retrieves a widget framework. In various embodiments, the widget framework is retrieved by downloading it from a dedicated, remote router server, such as the framework server 150 of Figure 1. In this regard, the dedicated, remote router server is associated with the router or the service provider.

Using the device signature, the agent may then form the landing page for the specific user device for display on the user device (block 408). In this regard, the agent distinguishes between public areas and private areas of the widget framework. The widget framework passes the public/private panels to the user device to be displayed by the browser on the user device. In one embodiment, the framework with public and private widgets is kept on the central server (e.g., framework server 150) and may be modified or added to by the user, administrator or third-party developers. Various widgets (or content areas) of the landing page, whether public or private, may be updated regularly or in near real-time as needed. For example, widgets related to maps may be loaded once and updated if the router is moved, while widgets related to stock markets may be updated almost continuously to provide real-time updates. In further embodiments, the agent running on the controller of the router may allow the central server to push out configuration changes related to the router in real time.

Thus, embodiments of the present invention allow for many personal and public views from one mobile WWAN data modem access point (e.g., router). Using the service agent running on the controller of the router and CGI API'S, the router maintains private identities combined with web cookies and, by using a widget framework downloaded from a trusted server (e.g., framework server), a mashup of public and private panels of the router landing page can be configured and displayed. The user devices use any standard web browser to be able to view the personal router. The owner (administrator) of the router can designate public and personal panels of the framework.

In accordance with embodiments of the present invention, the framework server may be accessible by multiple routers. Further, the framework server may store the master framework, associated assets, media content, and information to be able to automatically generate actions for the requesting router. Such actions may grant access to various features, such as GPS, secure channel access to data, news or weather, in the public area. In the private area, personal email, pictures, and other web content services may be made available.

In the following, an example implementation of the CGI API is provided. The routers in accordance with embodiments of the present invention may connect many devices to a mobile 3G network. The router connects over wireless Ethernet, commonly called WiFi and extends connections beyond computer laptops to any type of consumer or business wireless device. For example, the router may connect to a wireless camera, a game box or a pay point.

The router may run a web server capable of executing Common Gateway Interface (CGI) scripts that are executed in firmware.

A programmer may write a CGI request that may be sent via an http connection to the router. CGI commands may be sent from a browser or any of the modern widget or gadget frameworks. Any scripting or programming language that can generate and respond to http traffic can talk to the router.

A user may connect to the router by following these steps:
1. Power on the router device.
2. From a user device with WiFi, connect to the router using the appropriate security, such as a WEP key.
3. Open a web browser and in the URL bar type this call request:
   http://192.168.1.1/getStatus.cgi?dataType=TEXT

Once a WiFI connection with the router is established, the user may access the CGI library of the router. The CGI commands use the http protocol and may be available without any form of authentication, other than the login and password to access the device. The user can make a request with a CGI command, such as starting GPS on GPS-enabled routers. The CGI library supports both GET and POST methods of receiving data.

The CGI may return all responses in text as a run of key value pairs separated by the ESCAPE character, ASCII Decimal 27. The response is symbolically defined as:

```
       <cgi-response> ::= <key-value-list>|
       <key-value-list> ::= <key-value-pair><separator>|<key-value-list>
       <key-value-pair> ::= <key>=<value>
       <separator> ::= ESC
```

To decode the key-value pairs, a keyword scanner or parsing code may be used to split the terms and then, for each pair, interpret the key as to its meaning.

Two example CGI commands, getStatus.cgi and getlastfix.cgi, will now be described.

### 1. getStatus.cgi for router Status

The purpose of the getStatus API is to return router status information. A user may call getStatus.cgi in order to obtain a complete list of text information that reports the state of the router device. Below is an explanation of each parameter that is returned in the list.

### Call to getStatus

The user may submit the following command:
http://192.168.1.1/getStatus.cgi?dataType=TEXT

### Return from getStatus

The getStatus.cgi function returns a lengthy list of key-value pairs. The router device responds with the following status values. The following is a table to look up the key and find the detailed explanation of the value range and notes for the function.

| **Feature** | **Key** | **Value** | **Notes** |
|---|---|---|---|
| WWAN | **WwNetwkFound** | Integer | 2G or 3G network |
| | | | |
| Network | | • 0 (No Network found) | availability. |
| Found | | • 1 (Network found) | |
| | | | |
| | | | |
| WWAN | **WwNetwkName** | Text: | Use "-" when unknown to allow returned values to be language- independent UA can change "-" to "No Network found" in appropriate language if desired. |
| | | | |
| Network | | • - | |
| | | • Vodafone | |
| Name | | • TME | |
| | | • O2 | |
| | | • sprint | |
| | | • Verizon | |
| | | • AT&T | |
| | | | |
| | | | |
| | | | |
| | | | |
| | | | |
| | | | |
| | | | |
| | | | |
| **Feature** | **Key** | **Value** | **Notes** |
| WWAN | **WwNetwkTech** | Text: | 2G or 3G airlink |
| | | | |
| Technology | | • GRPS | used for |
| | | • UMTS | |
| | | • HSPA | transmission |
| | | • HSUPA | |
| | | • EVDO | |
| WWAN | **WwRoaming** | Integer: | |
| | | | |
| Roaming | | 0 (Not Roaming) | |
| | | 1 (Roaming) | |
| | | 2 (Extended Network) | |
| WWAN RSSI | **WwRssi** | Integer: | 5 is high value, best |
| | | | |
| | | • 0 ∼ 5 | signal. |
| WWAN | **WwConnStatus** | Integer: | |
| | | | |
| Connection | | 0 Searching | |
| | | 1 Connecting | |
| Status | | 2 Connected | |
| | | 3 Disconnecting | |
| | | 4 Disconnected | |
| | | 5 Not Activated | |
| | | (EVDO) | |
| | | 6 Modem Failure | |
| | | 7 No SIM | |
| | | 8 SIM Locked | |
| | | 9 SIM Failure | |
| | | 10 Network Locked | |
| | | (invalid SIM) | |
| | | 11 Dormant (EVDO) | |
| WWAN | **WwSessionTxMb** | Double - MBytes | Session - Data |
| | | | |
| Traffic | | | Transmitted |
| WWAN | **WwSessionRxMb** | Double - MBytes | Session - Data |
| | | | |
| Traffic | | | Received |
| WWAN | **WwSessionTimeSecs** | Long - Seconds | Session - Elapsed |
| | | | |
| Traffic | | | Time |
| WWAN | **WwlpAddr** | Text | IP address |
| | | | |
| TCP/IP | | | |
| VWVAN | **WwMask** | Text | Mask |
| | | | |
| TCP/IP | | | |
| WWAN | **WwGateway** | Text | Gateway |
| | | | |
| TCP/IP | | | |
| WWAN | **WwDNS1** | Text | DNS |
| | | | |
| TCP/IP | | | |
| Battery level | **BaBattStat** | Integer: | 4 is high value fully |
| | | | |
| | | • 0 - 4 | charged. |
| Battery | **BaBattChg** | Integer: | |
| | | | |
| Charging | | 0 (not charging) | |
| | | 1 (charging) | |
| state | | | |
| WiFi | **WiConnClients** | Integer | Number of WiFi |
| | | | |
| | | | clients currently |
| | | | |
| | | | connected. |

### Additional getStaW for CDMA

In addition to the list values, the router device may return information particular to the 3G network or service provider. These are returned along with the standard getStatus response list.

| **Feature** | **Key** | **Value** | **Notes** |
|---|---|---|---|
| WWAN | **WwActivation** | Integer | Device activation on network |
| | | | |
| Network | | 0 | 0 idle not activated |
| | | 1 (normal) | 1 activated |
| Activation | | | 2 hfa activation in progress |
| | | | 3 hfa retry |
| | | | 4 hfa activation aborted |
| | | | 5 hfa activation failed |
| | | | 6 cidc in progress |
| | | | 7 cidc aborted |
| | | | 8 cidc failed |
| WWAN | **WwPrl** | Integer | Preferred Roaming List |
| | | | |
| Preferred | | 0 | 0 Disabled |
| | | 1 (normal) | 1 Idle |
| Roaming List | | | 2 Server unavailable |
| | | | 3 PRL in Progress |
| | | | 4 PRL aborted |
| | | | 5 PRL failed |
| | | | 6 Restarting |
| WWAN | **WwFumo** | Integer | Firmware upgrade over the |
| | | | |
| Fumo | | 0 | air |
| | | 1 (normal) | |
| | | | 0 Disabled |
| | | | 1 Idle |
| | | | 2 Server unavailable |
| | | | 3 FUMO in Progress |
| | | | 4 FUMO aborted |
| | | | 5 FUMO failed |
| | | | 6 Shuting down WiFi, Router |
| WWAN MSL | **MsiStatus** | Integer | Master Subsidy Lock |
| | | | |
| Status | | • 0 | 0 = Correct MSL not provided |
| | | • 1 | |
| | | | (by user input) |
| | | | |
| | | | 1 = Correct MSL value |
| | | | |
| | | | provided (can continue with |
| | | | |
| | | | operation requiring MSL; MSL |
| | | | |
| | | | serves as a password to |
| | | | |
| | | | change device settings) |

### 2. getlastfix.cgi for MiFi Location

The purpose of the getlastfix api is to obtain location information from the GPS unit built into router device. Although getlastfix.cgi API returns a range of information, the most useful value is the standard latitude and longitude coordinate, also called a geocode. Geographic Positioning System (GPS) makes use of a GPS unit built into router device. The unit combines signaling information through a GPS antenna tuned to the many orbiting GPS satellites. To improve the speed of access, the router device makes use of cellular operator equipment or equipment of another Internet server to inject time and satellite location information.

### Call to getlastfix

The following command tells the function that a user wants a response in text.
http://192.168.1.1/getlastfix.cgi?dataType=TEXT

### Return from getlastfix

The getlastfix.cgi function returns a list of key-value pairs. Most values are in meters. A user may look up the key and find the detailed explanation of the value range and notes for the function.

| **Key=Value** | **Notes** |
|---|---|
| altitude=<value:double, meter> | Altitude is not as reliable as |
| | |
| | latitude and longitude. |
| angle_uncertainty=<value:double, radian> | |
| fix_type=<value:uint32> | AcquiredMethod |
| heading=<value:double, degree> | Orientation of device 0..360. |
| horizontal_velocity=<value:double, meter> | Speed in meters per second |
| latitude=<value:double> | Decimal latitude including |
| | |
| | degrees, minutes and |
| | |
| | seconds. + 90.0 .. -90.0 |
| longitude=<value:double> | Decimal longitude including |
| | |
| | degrees, minutes and |
| | |
| | seconds. |
| | |
| | + 180.0 .. 180.0 |
| perpendicular_std_dev_uncertainty=<value:double, meter>ESC | |
| std_dev_uncertainty=<value:double, meter> | |
| timestamp=<value, long> | Local date and time |
| vertical_std_dev_uncertainty=<value, double> | |
| vertical_velocity=<value, meters> | In motion or not |
| horizontal_accuracy=<value:double, meter> | |
| vertical_accuracy=<value:double, meter> | |
| status=<value: int> | Indicates status of other data: |
| | |
| | 0 = no fix, invalid data |
| | |
| | 1 = valid fix data |
| | |
| | NOTE: |
| | |
| | Fix data may be identical to |
| | |
| | previous fix data; timestamp |
| | |
| | can be examined to determine |
| | |
| | this if necessary. |

### 3. Programming Examples

This section shares some programming tips and tricks.

### Parsing getStatus

Here is a simple example of processing the getStatus cgi return values. function updateNetworkInfoRsp(xmldoc)

```
 {
   var status = xmldoc.split(SEPARATOR); // 1st split => array of status items
   var status elements;
   var datavalue = "";
   var sstr = "";
   var batteryLevel = "0";
   var batteryChg = "0";
   var roaming = 0;
   var netwo_rkName = ""
   for(i=0; i < status.length; i++)
   {
      status_elements = status[i].split("="); // 2nd split
      if (status_elements(0) == 'WwNetwkFound')
      {
           ; // no network, no action
      }
      else if (status_elements[0] == 'WwRssi') // status_elements[1] is value
         datavalue = "/images/rssi" + status elements[1] + ".gif";
         getObjectRef(self, 'rssiImg').src = datavalue; // set image
      }
      else if (status_elements[0] == 'WwNetwkName')
      {
         networkName = status_elements[1];
         setHTML(self, 'networkName', networkName, false); // set text
      }
      else if (status_elements[0] == 'WwRoaming')
      {
          roaming = status_elements[1]; // defer setting HTML element
      }
      // process other status elements; omitted for clarity
   } // end for loop
    // now process HTML elements which have been deferred (not in loop)
    if (networkName == "")
    {
        roaming = "0"; // force roaming off if there is no network
    }
    datavalue = "/images/roam" + roaming + ".gif"
    getObjectRef(self, 'roamImg').src = datavalue; // set image path
    setHTML(self, 'wroam', statusA[ST_NWAN_ROAM_0 + parseInt (roaming)], false);
 } // end function
```

Various embodiments of the present invention may be implemented in a system having multiple communication devices that can communicate through one or more networks. The system may comprise any combination of wired or wireless networks such as a mobile telephone network, a wireless Local Area Network (LAN), a Bluetooth personal area network, an Ethernet LAN, a wide area network, the Internet, etc.

Communication devices may include a mobile telephone, a personal digital assistant (PDA), a notebook computer, etc. The communication devices may be located in a mode of transportation such as an automobile.

The communication devices may communicate using various transmission technologies such as Code Division Multiple Access (CDMA), Global System for Mobile Communications (GSM), Universal Mobile Telecommunications System (UMTS), Time Division Multiple Access (TDMA), Frequency Division Multiple Access (FDMA), Transmission Control Protocol/Internet Protocol (TCP/IP), Short Messaging Service (SMS), Multimedia Messaging Service (MMS), e-mail, Instant Messaging Service (IMS), Bluetooth, IEEE 802.11, etc.

An electronic device in accordance with embodiments of the present invention may include a display, a keypad for input, a microphone, an ear-piece, a battery, and an antenna. The device may further include radio interface circuitry, codec circuitry, a controller and a memory.

Various embodiments described herein are described in the general context of method steps or processes, which may be implemented in one embodiment by a software program product or component, embodied in a machine-readable medium, including executable instructions, such as program code, executed by entities in networked environments. Generally, program modules may include routines, programs, objects, components, data structures, etc. that perform particular tasks or implement particular abstract data types. Executable instructions, associated data structures, and program modules represent examples of program code for executing steps of the methods disclosed herein. The particular sequence of such executable instructions or associated data structures represents examples of corresponding acts for implementing the functions described in such steps or processes.

Software implementations of various embodiments of the present invention can be accomplished with standard programming techniques with rule-based logic and other logic to accomplish various database searching steps or processes, correlation steps or processes, comparison steps or processes and decision steps or processes.

The foregoing description of various embodiments have been presented for purposes of illustration and description. The foregoing description is not intended to be exhaustive or to limit embodiments of the present invention to the precise form disclosed, and modifications and variations are possible in light of the above teachings or may be acquired from practice of various embodiments of the present invention. The embodiments discussed herein were chosen and described in order to explain the principles and the nature of various embodiments of the present invention and its practical application to enable one skilled in the art to utilize the present invention in various embodiments and with various modifications as are suited to the particular use contemplated. The features of the embodiments described herein may be combined in all possible combinations of methods, apparatus, modules, systems, and computer program products.

## Claims

1. A method, comprising:
receiving a request from a user device by a portable hotspot for a landing page;
identifying the user device using a device signature;
retrieving a framework associated with the device signature from a central server, the framework including one or more content areas, wherein at least one content area includes content available to multiple user devices, and at least one content area includes content specific to the user device; and
forming a landing page for display on the user device using the framework and the content.

2. The method of claim 1, wherein the retrieving the framework includes retrieving the framework from a central server associated with the portable hotspot.

3. The method of claim 2, wherein the central server accesses a content server to retrieve content for at least one content area.

4. The method of claim 1, further comprising:
accessing a content server to retrieve content for at least one content area.

5. The method of claim 1, wherein the device signature is based on a cookie located on the user device.

6. The method of claim 1, wherein the device signature is based on a media access control (MAC) address of the user device.

7. The method of claim 1, wherein at least one content area includes content selected from one of the following: weather, news, traffic or maps or wherein the content specific to the user includes personal content.

8. An apparatus, comprising:
a processor; and
a memory unit coupled to the processor and including:
computer code for receiving a request from a user device for a landing page;
computer code for identifying the user device using a device signature;
computer code for retrieving a framework associated with the device signature from a central server, the framework including one or more content areas, wherein at least one content area includes content available to multiple user devices, and at least one content area includes content specific to the user device; and
computer code for forming a landing page for display on the user device using the framework and the content.

9. An apparatus, comprising:
a first interface configured to wirelessly interface with one or more user devices;
a second interface configured to interface with a wireless communication network; and
a controller configured to:
receive a request through the first interface from at least one user device for a landing page;
identify the user device using a device signature;
retrieve a framework associated with the device signature from a central server by accessing the central server through the second interface, the framework including one or more content areas, wherein at least one content area includes content available to multiple user devices, and at least one content area includes content specific to the user device; and
form a landing page for display on the user device using the framework and the content.

10. The apparatus of claim 8 or 9, wherein the retrieving the framework includes retrieving the framework from a central server associated with the apparatus.

11. The apparatus of claim 10, wherein the central server accesses a content server to retrieve content for at least one content area.

12. The apparatus of claim 8 or 9, further comprising:
accessing a content server to retrieve content for at least one content area.

13. The apparatus of claim 8 or 9, wherein the device signature is based on a cookie located on the user device.

14. The apparatus of claim 8 or 9, wherein the device signature is based on a media access control (MAC) address of the user device.

15. The apparatus of claim 8 or 9, wherein at least one content area includes content selected from one of the following: weather, news, traffic or maps or wherein the content specific to the user includes personal content.
